# EUROPÄISCHE PATENTSCHRIFT

(11) **EP 3 880 473 B1**
(45) Veröffentlichungstag und Bekanntmachung des Hinweises auf die Patenterteilung: **20.04.2022**
(21) Anmeldenummer: 18807033.8
(22) Anmeldetag: 15.11.2018
(51) Int. Cl.: B32B 37/14, B29C 55/00, B32B 3/26, B32B 7/035, B29C 48/08, B32B 27/20

(54) **RECYCLINGFREUNDLICHES VERPACKUNGSLAMINAT MIT GUTER BARRIEREWIRKUNG SOWIE NIEDRIGER DICHTE UND VERFAHREN ZU DESSEN HERSTELLUNG**
RECYCLABLE PACKAGING LAMINATE HAVING A GOOD BARRIER EFFECT AND LOW DENSITY, AND METHOD FOR THE PRODUCTION THEREOF
STRATIFIÉ D'EMBALLAGE RECYCLABLE À EFFET BARRIÈRE SATISFAISANT ET À FAIBLE DENSITÉ ET SON PROCÉDÉ DE FABRICATION

(43) Veröffentlichungstag der Anmeldung: 22.09.2021
(73) Patentinhaber: Constantia Pirk GmbH & Co. KG, 92712 Pirk (DE)
(72) Erfinder: LAMTIGUI, Thami, 80992 München (DE); GREFENSTEIN, Achim, 67122 Altrip (DE)
(74) Vertreter: Patentanwälte Pinter & Weiss OG
(86) Internationale Anmeldenummer: PCT/EP2018/081477
(87) Internationale Veröffentlichungsnummer: WO 2020/098947

(56) Entgegenhaltungen:
- WO-A1-2018/202479
- WO-A2-2010/141232

## Beschreibung

Die gegenständliche Erfindung betrifft ein Verpackungslaminat mit einer ersten Laminatschicht und einer zweiten Laminatschicht, wobei die erste Laminatschicht ein co-extrudierter und gereckter Verbund aus einer Substratschichtmit einem PE-Anteil von zumindest 60Vol%, einer Verbindungsschicht und einer Barriereschicht aus einem Barrierepolymer, vorzugsweise aus Polyamid oder Ethylen-Vinylalkohol-Copolymer, mit einer Dicke von maximal 20% der Gesamtdicke der ersten Laminatschicht, ist und die zweite Laminatschicht zumindest 80 Gew% PE enthält, wobei die Verbindungsschicht zwischen der Substratschicht und der Barriereschicht angeordnet ist und die erste Laminatschicht an deren Barriereschicht mit der zweiten Laminatschicht verbunden ist.

In der Verpackungsindustrie werden Verpackungslaminate verwendet, die je nach Anwendung verschiedene Eigenschaften aufweisen sollen. Solche Verpackungslaminate sind in der Regel mehrschichtige Kunststofffolien, die im Extrusionsverfahren, Co-Extrusionsverfahren (in beiden Fällen sowohl im Flachfolien-, als auch im Blasfolienverfahren) oder Kaschierverfahren (Verbindung einzelner Schichten mittels eines Kaschierklebers), auch Mischungen davon, hergestellt werden. Im Verpackungslaminat können auch nicht aus Kunststoff bestehende Schichten integriert sein, beispielsweise eine Schicht aus Aluminium oder Papier. Das Verpackungslaminat weist in der Regel auch eine äußere Siegelschicht auf, um das Verpackungslaminat durch Thermosiegeln zu einer gewünschten Verpackung, wie z.B. einem Beutel, einem Sack, eine Tüte, usw., zu verarbeiten.

Eine typische Anforderung an ein Verpackungslaminat ist eine Barrierefunktion gegen Wasserdampf, Sauerstoff und Aroma. Zu diesem Zweck enthält das Verpackungslaminat in der Regel eine Barriereschicht aus Aluminium oder einem geeigneten Barrierepolymer, wie beispielweise Ethylen-Vinylalkohol-Copolymer (EVOH) oder Polyamid (PA). Daneben können noch weitere Schichten enthalten sein, um dem Verpackungslaminat die gewünschten Eigenschaften, wie Zähigkeit, Steifigkeit, Schrumpffähigkeit, Reißfestigkeit, etc., zu verleihen. Eine Siegelschicht ist typischerweise aus einem Polyolefin, in der Regel Polypropylen (PP) oder Polyethylen (PE) in den verschiedenen Dichten LLDPE, LDPE, MDPE oder HDPE, ausgeführt.

Um das Verpackungslaminat einfach verarbeiten zu können, darf sich das Verpackungslaminat natürlich auch nicht Werfen oder Einrollen (das sogenannte Curling), weshalb üblicherweise symmetrische Schichtaufbauten zum Einsatz kommen.

Ferner ist es bekannt, die Eigenschaften des Verpackungslaminats durch eine mono- oder biaxiale Orientierung zu verändern. Eine solche Orientierung kann durch den Extrusionsprozess erfolgen, beispielsweise bei einem Mehrfachblasen-Extrusionsverfahren (multiple bubble process), oder erst nach dem Extrusionsprozess durch eine Dehnung des Verpackungslaminats in Maschinenrichtung (in Längsrichtung des Verpackungslaminats) und/oder in Querrichtung (normal auf die Längsrichtung). Durch die Orientierung des Verpackungslaminats kann vor allem die Steifigkeit, Zugfestigkeit und Zähigkeit verbessert werden. Weiters kann durch die Orientierung die Kristallisation des Verpackungslaminats verändert werden, dass auch an sich eher trübe Materialien, wie z.B. HDPE, nach dem Verstrecken eine höhere Transparenz erreichen.

Die WO 2013/032932 A1 beschreibt ein derartiges Verpackungslaminat, beispielsweise mit dem Aufbau HDPE/Verbindungsschicht/EVOH/Verbindungsschicht/Siegelschicht, als Schrumpffolie. Zur Herstellung der Schrumpfeigenschaft wird das Verpackungslaminat als Ganzes biaxial gereckt. Damit kann das Recken aber nur durchgeführt werden, nachdem die einzelnen Schichten des Verpackungslaminats eine ausreichende Verbundhaftung erreicht haben. Ähnliches zeigt die WO 2009/017588 A1. Die WO 2013/032932 A1 und die WO 2009/017588 A1 zielen aber vorrangig auf ein geeignetes Material für die Verbindungsschicht ab.

WO 2018/202479 A1 beschreibt ein recyclingfreundlichen Verpackungslaminat mit einer ersten Laminatschicht und einer zweiten Laminatschicht aus PE, wobei die erste Laminatschicht ein co-extrudierter und in Maschinenrichtung gereckter Verbund aus einer HDPE Substratschicht, einer Verbindungsschicht und einer Barriereschicht aus einem Barrierepolymer, vorzugsweise aus Polyamid oder Ethylen-Vinylalkohol-Copolymer, mit einer Dicke von maximal 20% der Gesamtdicke der ersten Laminatschicht, ist, wobei die Verbindungsschicht zwischen der Substratschicht und der Barriereschicht angeordnet ist und die erste Laminatschicht an deren Barriereschicht mit der zweiten Laminatschicht verbunden ist.

Es sind auch Folien aus sogenannten kavitierten Polyolefinen, insbesondere Polypropylen bekannt. Zur Herstellung solcher Folien wird dem verwendeten Polyolefin vor dem Extrudieren ein Kavitierungsmittel hinzugefügt. Nach dem Extrudieren wird die Folie gereckt (in Maschinenrichtung und/oder Querrichtung), wodurch sich durch das eingebettete Kavitierungsmittel die Mikrokavitäten in der Folie ausbilden. Kavitierte PP-basierte Folien haben eine gute Steifigkeit und eine geringe Wasserdurchlässigkeit (eine hohe Barriere gegen Wasser / Wasserdampf), aber eine schlechte Sauerstoff- und Aromadurchlässigkeit (geringe Sauerstoffbarriere und Aromabarriere).

Die US 2012/0135256 A1 beschreibt ein Verpackungslaminat bestehend aus einer ersten Laminatschicht aus Ethylen-Vinylalkohol-Copolymer (EVOH) und einer zweiten Laminatschicht aus einem kavitierten PP oder einer Mischung aus kavitierten PP und HDPE (Polyethylen hoher Dichte). Die beiden Laminatschichten sind coextrudiert und werden nach dem Extrudieren in Maschinenrichtung und Querrichtung gereckt.

Auch die WO 2010/141232 A1 beschreibt die Verwendung eines Kavitierungsmittels in einem Verpackungslaminat, erläutert aber nicht an welchen Stellen im Verpackungslaminat das Kavitierungsmittel eingesetzt wird.

Es ist eine Aufgabe der gegenständlichen Erfindung ein recyclefreundliches Verpackungslaminat mit einer niedrigen Dichte und dennoch einer hohen Barriere gegen Wasser, Sauerstoff und Aroma anzugeben, das ferner flexibel einsetzbar ist und gute Siegeleigenschaften aufweist. Es ist weiters eine Aufgabe, ein Herstellverfahren für ein solches Verpackungslaminat anzugeben.

Diese Aufgabe wird durch ein Verfahren zum Herstellen eines Verpackungslaminats nach Anspruch 1 und durch ein Verpackungslaminat nach Anspruch 3 gelöst.

Durch das Recken der ersten Laminatschicht vor dem Laminieren mit der zweiten Laminatschicht wird die Barrierewirkung der ersten Laminatschicht deutlich erhöht. Zusätzlich vereinfacht sich die Herstellung durch den einfachen, asymmetrischen Aufbau der ersten Laminatschicht gegenüber üblichen symmetrischen Aufbauten erheblich, was auch die Herstellkosten deutlich senkt. Ferner kann durch das Kavitierungsmittel die Dichte der kavitierten Schicht verringert werden, wodurch das Flächengewicht des Verpackungslaminats reduziert werden kann. Auf diese Weise können sehr leichte und auch dünnwandige Verpackungen hergestellt werden, ohne Abstriche bei den Barriereeigenschaften hinnehmen zu müssen.

Erfindungsgemäß weist auch die gereckte zweite Laminatschicht eine Polyethylenschicht mit einem Kavitierungsmittel auf, wodurch das Flächengewicht des Verpackungslaminats noch weiter reduziert werden kann. Hierbei ist vorgesehen, dass die zweite Laminatschicht eine Polyethylenschicht mit einem Kavitierungsmittel aufweist, die an einer oder beiden Seiten mit einer Polytheylenschicht ohne Kavitierungsmittel verbunden ist.

Durch Metallisieren oder Beschichten mit Aluminiumoxid oder Siliziumoxid und/oder zusätzlichen Barrierelacken auf die Barriereschicht vor dem weiteren Kaschieren kann zusätzlich noch die Barrierewirkung erhöht werden.

Für gewisse Anwendungen ist es vorteilhaft, wenn die erste Laminatschicht an der Substratschicht mit einer weiteren ein- oder mehrschichtigen Laminatschicht verbunden wird. Dabei kann die erste Laminatschicht an der Barriereschicht und/oder an der Substratschicht bedruckt, metallisiert oder beschichtet sein. Ebenso kann zumindest eine Schicht der weiteren Laminatschicht bedruckt, metallisiert oder beschichtet sein.

Für gewisse Anwendungen ist es vorteilhaft, wenn die erste Laminatschicht an deren Substratschicht mit einer unidirektional (in Maschinenrichtung) oder bidirektional gereckten vierten Laminatschicht verbunden wird, die eine Substratschicht mit einem PE-Anteil von zumindest 60 Gew%, eine Barriereschicht aus einem Barrierepolymer und eine dazwischen angeordnete Verbindungsschicht aufweist. Ein derartiges Verpackungslaminat weist besonders gute Barriereeigenschaften auf.

Eine weitere vorteilhafte Ausgestaltung ergibt sich, wenn die zweite Laminatschicht ein coextrudiertes, in Maschinenrichtung oder bidirektional gerecktes Laminat aus einer kavitierten Substratschicht mit einem PE-Anteil von zumindest 60 Gew%, vorzugsweise zumindest 70 Gew% und ganz besonders vorzugsweise zumindest 80 Gew%, einer Verbindungsschicht, einer Barriereschicht aus einem Barrierepolymer, vorzugsweise aus Polyamid oder Ethylen-Vinylalkohol-Copolymer, mit einer Dicke von maximal 20% der Gesamtdicke der zweiten Laminatschicht und einer Siegelschicht ist, wobei die Verbindungsschicht der zweiten Laminatschicht zwischen der Substratschicht und der Barriereschicht der zweiten Laminatschicht angeordnet ist und die Siegelschicht an der Substratschicht angeordnet ist und die Barriereschicht der zweiten Laminatschicht mit der Barriereschicht der ersten Laminatschicht verbunden ist. Auch ein solches Verpackungslaminat weist besonders gute Barriereeigenschaften auf. Zusätzlich wird dadurch die Siegelschicht vorteilhaft in die co-extrudierte zweite Laminatschicht integriert, womit keine weiteren Herstellungsschritte für das Verpackungslaminat benötigt werden.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine erste Ausgestaltung eines erfindungsgemäßen Verpackungslaminats,
Fig.2 eine zweite vorteilhafte Ausgestaltung eines erfindungsgemäßen Verpackungslaminats,
Fig.3 eine dritte vorteilhafte Ausgestaltung eines erfindungsgemäßen Verpackungslaminats und
Fig.4 eine vierte vorteilhafte Ausgestaltung eines erfindungsgemäßen Verpackungslaminats.

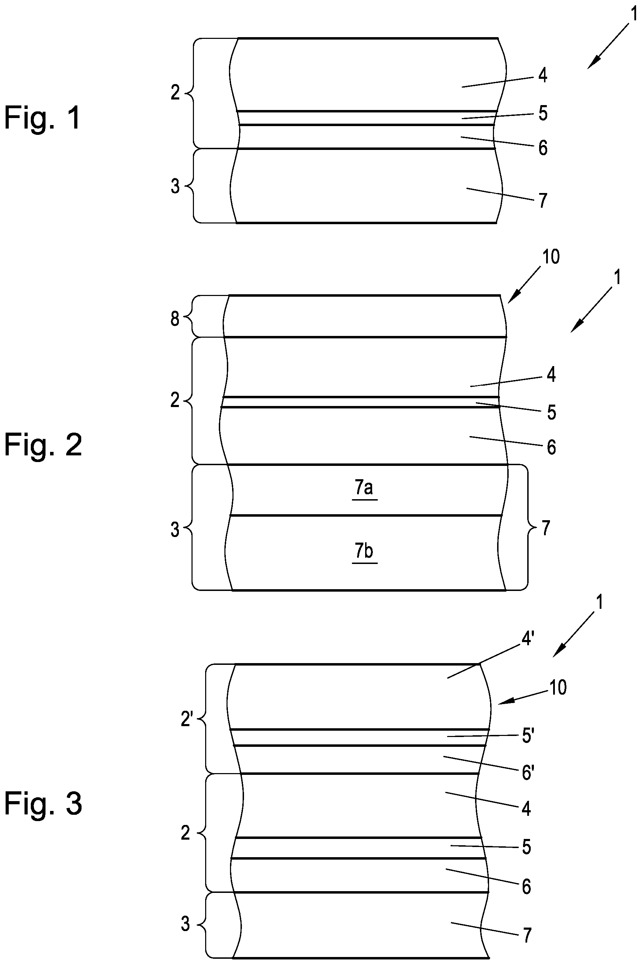

Die Fig.1 zeigt ein erfindungsgemäßes Verpackungslaminat 1 mit einer ersten Laminatschicht 2 und einer damit verbundenen zweiten Laminatschicht 3.

Die erste Laminatschicht 2 im Verpackungslaminat 1 ist in Maschinenrichtung (MDO) und/oder in Querrichtung (TDO), also unidirektional (in MDO) oder bidirektional, gereckt und hat einen asymmetrischen Schichtaufbau mit einer Substratschicht 4 und einer Barriereschicht 6, die durch eine Verbindungsschicht 5 miteinander verbunden sind. Die Dicke der ersten Laminatschicht 2 beträgt vorzugsweise 10 bis 40µm.

Die Substratschicht 4 ist ein Polyethylen (PE), wobei verschiedene Polyethylentypen eingesetzt werden können, wie z.B. HDPE (Polyethylen hoher Dichte mit einer Dichte zwischen 0,94-0,97 g/cm³), MDPE (Polyethylen mittlerer Dichte), LDPE (Poylethylen niedriger Dichte mit einer Dichte zwischen 0,915-0,935 g/cm³), LLDPE (lineare Polyethylen niedriger Dichte mit einer Dichte zwischen 0,87-0,94g/cm³) oder mLLDPE (lineares Metallocene Polyethylen niedriger Dichte). Bevorzugt kommen HDPE oder MDPE zum Einsatz. Der Substratschicht 4 können übliche Additive (wie Slipadditive, Antiblockadditive, Füllstoffe, usw.) zugesetzt sein. In der Substratschicht 4 könen auch verschiedene Polyethylentypen eingesetzt werden, als Mischung oder Coextrudat. Ebenso kann die Substratschicht 4 ein kompatibles Polyolefin-Material umfassen. Als kompatibles Polyolefin-Material kommen grundsätzlich jegliche Arten von Polyethylenen in Frage, insbesondere auch Ethylen-Copolymere, wie beispielsweise Ethylen-Vinylacetat-Copolymer (EVA), Methacrylsäureethylester (EMA), Ethylen/AcrylsäureCopolymer (EAA) oder Ethylen-Butylacrylat-Copolymer (EBA). Ebenso kann als kompatibles Polyolefin-Material auch Polypropylen (PP) oder ein Cycloolefin-Copolymer (COC) im Ausmaß von maximal 20 Gew% verwendet werden. Im Falle vom PP wird vorzugsweise ein Polypropylen-Random-Copolymer mit Ethylen als Comonomer (üblich 5 bis 15%), ein Polypropylen-Copolymer mit Ethylen oder ein Polypropylen-Homopolymer, das mit linearen PE-Typen, wie mLLDPE, LLDPE oder HDPE ausreichend kompatibel ist, verwendet, um eine zumindest begrenzte Recycelfähigkeit zu erzielen. Sind kompatible Polyolefin-Materialien enthalten, dann beträgt der Anteil an Polyethylen (PE) in der Substratschicht vorzugsweise mindestens 60 Gew%, vorzugsweise zumindest 70 Gew% und ganz besonders vorzugsweise zumindest 80 Gew%, um die Recycelfähigkeit zu verbessern.

Das PE und das kompatible Polyolefin-Material können dabei in der Substratschicht 4 als Mischung vorliegen. Die Substratschicht 4 kann aber auch mehrschichtig (extrudiert oder co-extrudiert) aufgebaut sein mit einer (oder auch mehrerer) PE Schicht(en) und einer (oder auch mehrerer) Schicht(en) aus dem kompatiblen Polyolefin-Material. Die Dicke der Substratschicht 4 beträgt vorzugsweise 5 bis 35µm.

Zum PE der Substratschicht 4 ist ein Kavitierungsmittel hinzugefügt, wobei das Kavitierungsmittel in einer Menge von 5 - 30 Gew%, vorzugsweise 15 - 25 Gew%, der Substratschicht 4 hinzugefügt wird. Als Kavitierungsmittel kommt ein zu PE inkompatibles Polymer (also ein Polymer, das in der PE Matrix isoliert bleibt), beispielsweise Polyamide (PA), Polyester (z.B. PET oder PBT), Polylactide (PLA), in Frage. Ebenso kann ein mineralisches Kavitierungsmittel, wie beispielsweise Kalziumcarbonat oder Glimmer verwendet werden. Das Kavitierungsmittel liegt üblicherweise als feines Pulver vor, das vor dem Extrudieren als Masterbatch in einer PE-Matrix eingebettet und mit dem PE Granulat gemischt wird.

Um eine bessere Bedruckung und auch eine bessere Anhaftung der kavitierten Schicht an der Verbindungsschicht 5 zu erreichen, kann die Substratschicht 4 auch mehrschichtig aufgebaut sein. Dazu wird die kavitierte PE-Schicht auf einer oder beiden Seiten von einer nicht kavitierten PE-Schicht umgeben. Ein denkbarer Aufbau der Substratschicht 4 der ersten Laminatschicht 3 wäre beispielsweise eine kavitierte PE-Schicht, die an einer Seite mit einer nicht kavitierten PE-Schicht verbunden ist (z.B. coextrudiert), wobei die kavitierte PE-Schicht im Verpackungslaminat 1 der zweiten Laminatschicht 3 zugewandt ist. Ein anderer bevorzugter Aufbau der Substratschicht 4 wäre beispielsweise eine kavitierte PE-Schicht, die an beiden Seiten mit einer nicht kavitierten PE-Schicht verbunden ist (z.B. coextrudiert). Ein solcher Aufbau der Substratschicht 4 kann auch die Siegeleigenschaften des Verpackungslaminats 1 verbessern.

Die Summe aus Polyethylen, Kavitierungsmittel, allfälligen Additiven und möglichen kompatiblen Polyolefin-Materialen in der Substratschicht 4 kann natürlich gemeinsam nur 100 Gew% ergeben. Maßgebend ist dabei der Anteil an Polyethylen, an den sich die anderen Anteile richten müssen.

Die Barriereschicht 6 besteht aus einem Barrierepolymer, also einem Polymer mit einer ausreichenden Barriereeigenschaft, insbesondere gegen Sauerstoff, Wasser und/oder Aroma. Das Barrierepolymer ist vorzugsweise ein Polyamid (PA) oder ein Ethylen-Vinylalkohol-Copolymer (EVOH). Bevorzugt wird EVOH als Barrierepolymer. Die Barriereschicht 6 hat eine Dicke von maximal 20%, vorzugsweise 5 bis 10%, der Gesamtdicke der ersten Laminatschicht 2, also maximal 2 bis 8µm. Durch die geringe Dicke der Barriereschicht 6 wird dadurch die Recyclingfreundlichkeit nicht beeinträchtigt.

Die Verbindungsschicht 5 dient zum Verbinden der Barriereschicht 6 und der Substratschicht 4. Hierbei soll eine ausreichende Verbundhaftung erreicht werden, insbesondere um eine unerwünschte Delamination der ersten Laminatschicht 2 sicher zu verhindern. Geeignete Verbindungsschichten 5 bestehen vorzugsweise aus Polymeren mit erhöhter Polarität, beispielsweise auf Basis von mit Maleinsäureanhydrid modifizierten Polyolefinen (wie PE oder PP), Ethylen-Vinylacetat-Copolymer (EVA), Ethylen/Acrylsäure-Copolymer (EAA), Ethylen-Butylacrylat-Copolymer (EBA), oder ähnliche Polyolefincopolymere. Die Dicke einer Verbindungsschicht 5 beträgt maximal 10% der Gesamtdicke der ersten Laminatschicht 2, typischerweise 1 bis 5µm.

Die zweite Laminatschicht 3 besteht vorwiegend aus einem PE, wobei der PE-Anteil an der gesamten Polymermenge der zweiten Laminatschicht 3 ohne etwaige zugesetzte mineralische oder anderen Füllstoffe zumindest 80 Gew% betragen soll. Hier können verschiedene PE-Typen, also LDPE, LLDPE, MDPE, HDPE reinsortig oder auch als Mischung oder in Form von Co-Polymeren oder auch mehrschichtig, verwendet werden. Die Dicke der zweiten Laminatschicht 3 beträgt je nach Anwendung des Verpackungslaminats 1 typischerweise zwischen 20 bis 200 µm und bildet vorzugsweise im Verpackungslaminat 1 eine Siegelschicht aus.

Eine besonders vorteilhafte Ausführungsform der Erfindung besteht in der Verwendung einer, vorzugsweise 20 bis 40 µm dünnen, coextrudierten, und gereckten, sowie ebenfalls zumindest in einer Schicht kavitierten PE-Schicht als zweiter Laminatschicht 3. Ein denkbarer Aufbau der zweiten Laminatschicht 3 wäre beispielsweise eine kavitierte PE-Schicht, die an einer Seite mit einer nicht kavitierten PE-Schicht verbunden ist (z.B. coextrudiert), wobei die kavitierte PE-Schicht im Verpackungslaminat der ersten Laminatschicht 2 zugewandt ist. Ein anderer bevorzugter Aufbau der zweiten Laminatschicht wäre beispielsweise eine kavitierte PE-Schicht, die an beiden Seiten mit einer nicht kavitierten PE-Schicht verbunden ist (z.B. coextrudiert).

Auch in der zweiten Laminatschicht 3 wird für die angestrebte Recycelfreundlichkeit der verbleibende Rest natürlich aus PE oder einem kompatiblen Polyolefin-Material, so wie oben beschrieben, bestehen.

Durch die Verwendung von vorwiegend PE und kompatiblen Materialien im Verpackungslaminat 1 kann ein besonders reycylingfreundliches Laminat hergestellt werden, das mit gängigen Methoden im mechanischen Recycling einfach und kostengünstig wiederverwertet werden kann, sowie über eine sehr geringe Dichte verfügt.

Die erste Laminatschicht 2 wird durch Co-Extrusion hergestellt, weil das eine besonders einfache, kostengünstige Herstellung ermöglicht. Vorzugsweise kommt das bekannte Blasfolien- oder Flachfolienextrusionsverfahren zum Einsatz.

Die erste Laminatschicht 2 wird nach der Co-Extrusion uni- oder bidirektional, also in Maschinenrichtung (in der Regel die Längs- oder Extrusionsrichtung) und/oder in Querrichtung (90° verdreht zur Maschinenrichtung), gereckt. Der Reckgrad in Maschinenrichtung und in Querrichtung muss dabei nicht gleich sein. Der Reckgrad in Maschinenrichtung beträgt dabei vorzugsweise zumindest 4:1 bis 8:1. Der Reckgrad in Querrichtung beträgt dabei vorzugsweise zumindest 5:1 bis 10:1. Das Recken kann dabei in-line (also unmittelbar nach der Co-Extrusion) oder off-line (also zu einem späteren Zeitpunkt nach der Co-Extrusion) erfolgen. Dabei kann zuerst in Maschinenrichtung gereckt werden und anschließend in Querrichtung, oder ebenso ist es denkbar in beide Richtungen gleichzeitig zu recken. Das Recken findet typischerweise ca. 10°C bis 30°C, typisch ca. 20°C, unterhalb der niedrigsten Schmelztemperatur (bei HDPE ca. 128°C bis 130°C) in der ersten Laminatschicht 2 statt.

Hier ist anzumerken, dass bei der Blasfolienextrusion und Flachfolienextrusion der Extrusionsspalt (bei der Blasfolie 1,5 bis 2,5 mm) bzw. der Spalt der Extrusionsdüse deutlich größer ist, als die Enddicke der extrudierten Folie (typisch zwischen 10 bis 200 µm). Hierzu wird die extrudierte Schmelze bei Temperaturen deutlich über dem Schmelzpunkt des extrudierten Polymers gedehnt, wodurch es die endgültige Dicke erhält. Bei der Blasfolienextrusion wird die Schmelze z.B. typischerweise in Querrichtung um ca. den Faktor 2 bis 3 (das sogenannte Aufblasverhältnis) und in Längsrichtung um den Faktor 1:10 bis 1:100 (das sogenannte Abzugsverhältnis) gedehnt. Dieses Dehnen beim Extrudieren kann aber nicht mit dem Recken einer Kunststofffolie verglichen werden, da das Recken üblicherweise bei Temperaturen knapp unterhalb des Schmelzpunktes des Polymers erfolgt, um die ungeordneten Polymere und die teilkristallinen Bereiche durch das Recken in Reckrichtung bleibend auszurichten.

Durch das uni- oder bidirektionale Recken entstehen in bekannter Weise aufgrund des Kavitierungsmittels im PE der Substratschicht 4 der ersten Laminatschicht 2 Mikrokavitäten. Dabei wurde festgestellt, dass durch die Mikrokavitäten die Dichte der Substratschicht 4 deutlich gesenkt werden konnte, auf Werte zwischen 0,4 - 0,85g/cm³. Die erste Laminatschicht 2 wird damit leichter. Das gleiche gilt natürlich analog auch für die zweite Laminatschicht 3, wenn diese ein kavitiertes Polyethylen beinhaltet.

Ein unsymmetrischer Aufbau der gereckten ersten Laminatschicht 2 aus vorrangig Polyethylen (insbesondere PE, EVOH) ist untypisch und wurde bisher, insbesondere bei der Blasfolie, in der Praxis vermieden, da man davon ausging, dass sich ein solcher Aufbau, insbesondere durch Wasseraufnahme der in der ersten Laminatschicht 2 außenliegenden polaren Barriereschicht 6, einrollt (Curling), was die Weiterverarbeitung erschweren oder unmöglich machen würde. Es hat sich aber gezeigt, dass das Einrollen in der konkreten Ausgestaltung des Aufbaus in einem akzeptablen Maß passiert, das für die Weiterverarbeitung nicht hinderlich ist. Dazu ist es vorteilhaft, wenn die erste Laminatschicht 2 sehr zeitnah nach der Fertigung mit der zweiten Laminatschicht 3 verbunden wird, um dadurch vor allem die Wasseraufnahme der Barriereschicht 6 zu verringern. Unter Umständen kann es auch erforderlich oder sinnvoll sein, die co-extrudierte Folienrolle mit der ersten Laminatschicht 2 bis zum Kaschieren durch eine geeignete Verpackung vor der Wasseraufnahme zu schützen.

Der Vorteil des untypischen asymmetrischen Aufbaus der ersten Laminatschicht 2 liegt aber vor allem darin, dass nur eine einzige teure und wenig steife Verbindungsschicht 5 benötigt wird. Damit können die Kosten für die erste Laminatschicht 2 reduziert werden und es kann eine steifere erste Laminatschicht 2 erzielt werden. Die höhere Steifigkeit ist vor allem bei der Verwendung des Verpackungslaminats 1 zur Herstellung eines Beutels vorteilhaft.

Durch die Verstreckung der Barriereschicht 6 werden im Vergleich zum ungereckten gleichartigen Barrierepolymer auch ca. drei- bis vierfach erhöhte Barrierewerte erzielt, wodurch weniger teures Barrierepolymer bei gleicher Barrierewirkung zum Einsatz kommen kann. Dadurch können die Kosten der ersten Laminatschicht 2 deutlich gesenkt werden. Abgesehen davon wird für eine gleiche Barrierewirkung weniger Barrierepolymer benötigt, was die Recycelfähigkeit zusätzlich verbessert.

Bevorzugt wird die erste Laminatschicht 2 mit dem mehrstufigen Blasfolienextrusionverfahren (z.B. Triple- oder Double-Bubble-Verfahren) hergestellt, weil sich damit produktionsbedingt weniger Randabschnitt ergibt, was vor allem bei den teureren Barrierepolymeren zu niedrigeren Kosten des Verpackungslaminats 1 führt. Bei der Blasfolienextrusion können auch zähfließendere HDPE-Materialien mit einem MFI (Mass Flow Index) von kleiner 3 verwendet werden. Solche HDPE Materialen haben einen höheres Molekulargewicht und bessere mechanische Eigenschaften, was für die Verwendung in einem Verpackungslaminat 1 günstig ist. Allerdings würde ein solches Material besonders leicht in Längsrichtung reißen und es kommt sogar zum unerwünschten Spleißen in Längsrichtung. Diese unerwünschte Eigenschaft kann durch das Einbinden des HDPE-Materials mit einem MFI von kleiner 3 in eine erste Laminatschicht 2 wie beschrieben eliminiert werden und sogar ein gleichmäßiges Reißen in beide Richtungen erzielt werden.

Für die Herstellung des Verpackungslaminats 1 werden die gereckte erste Laminatschicht 2 und die zweite Laminatschicht 3, vorzugsweise durch Extrusionskaschierung, Extrusionsbeschichtung oder Klebekaschieren, miteinander verbunden, wobei die zweite Laminatschicht 3 mit der Barriereschicht 6 der ersten Laminatschicht 2 verbunden ist. Bei der Extrusionsbeschichtung wird die zweite Laminatschicht 3 auf die Barriereschicht 6 der ersten Laminatschicht 2 aufextrudiert, wobei dazwischen vorzugsweise auch ein Haftvermittler vorgesehen sein sollte. Beim Kaschieren wird die zweite Laminatschicht 3 mittels eines geeigneten Kaschierklebers, beispielsweise auf Basis von Polyurethanklebern oder auch Polyolefincopolymeren bei der Extrusionskaschierung, mit der Barriereschicht 6 verbunden. Die Dicke des Kaschierklebers beträgt vorzugsweise 2 bis 5 g/m² bei üblichen Klebern auf Polyurethanbasis bzw. 5 bis 20 g/m² bei der Extrusionskaschierung.

Die Barriereschicht 6 kann dazu auch oberflächenbehandelt sein, beispielsweise durch eine Corona- oder Flammbehandlung, um die Hafteigenschaften zu verbessern.

Die zweite Laminatschicht 3 bildet dabei vorzugsweise eine Siegelschicht 7 aus, die in einer Verpackung aus dem Verpackungslaminat 1 in der Regel dem verpackten Produkt zugewandt ist. Die Verpackung wird dabei durch Zuschneiden, Falten und Thermosiegeln des Verpackungslaminats 1, Siegelschicht gegen Siegelschicht oder Siegelschicht gegen einen anderen Verpackungsteil, hergestellt. Mögliche Verpackungen sind Beutel, Tüten, Säcke, etc.

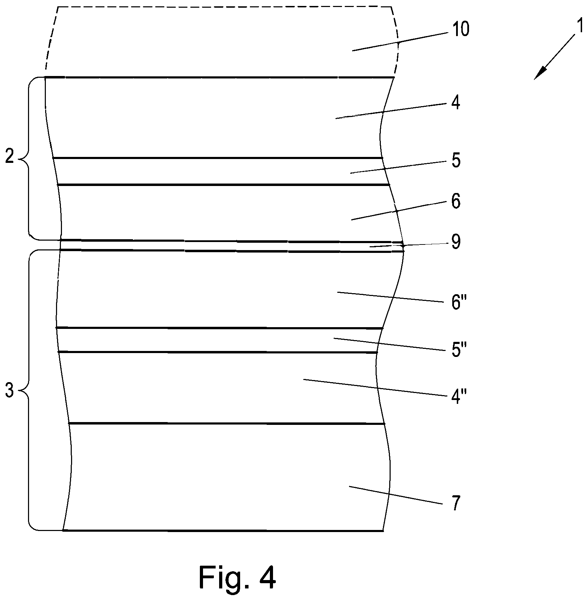

Die zweite Laminatschicht 3 kann auch mehrschichtig ausgeführt sein, beispielsweise extrudiert oder co-extrudiert, wie in Fig.2 angedeutet und nachfolgend im Detail beschrieben. Die zweite Laminatschicht 3 kann aber auch mit einer Barrierefunktion ausgestattet sein und kann auch gereckt sein, wie in Fig.4 angedeutet und nachfolgend im Detail beschrieben.

In einer weiteren Ausgestaltung des Verpackungslaminats 1, wie in Fig.2 dargestellt, ist die erste Laminatschicht 2 an der Seite der Barriereschicht 6 mit der zweiten Laminatschicht 3 verbunden und an der Seite der Substratschicht 4 mit einer weiteren Laminatschicht 10, hier einer dritten Laminatschicht 8. Die dritte Laminatschicht 8 ist vorzugsweise eine ein- oder mehrschichtigen Polymerfolie, beispielsweise eine Folie aus vorwiegend PE (mindestens 80 Gew% PE), wie mit Bezug auf die zweite Laminatschicht 3 beschrieben. Die dritte Laminatschicht 8 kann auf die erste Laminatschicht 2 wieder entweder extrusionsbeschichtet oder klebekaschiert werden, wie mit Bezugnahme auf die Siegelschicht 7 in Fig.1 erläutert. Ein solches Verpackungslaminat 1 nach Fig.2 kann beispielsweise zur Herstellung von Tuben verwendet werden. In diesem Fall liegt die Dicke der zweiten Laminatschicht 3 und der dritten Laminatschicht 8 typischerweise im Bereich von 150µm.

In Fig.2 ist weiters angedeutet, dass auch die zweite Laminatschicht 3 mehrschichtig aufgebaut sein kann, hier beispielsweise mit zwei Schichten 7a, 7b, die die Siegelschicht 7 ausbilden, beispielsweise auch mit einer Schicht aus einem kavitierten Polyethylen wie oben beschrieben. Gleiches gilt für die dritte Laminatschicht 8. Ein solcher Aufbau der zweiten Laminatschicht 3 kann natürlich auch in einer Ausführung nach Fig.1 vorgesehen sein.

Es ist ferner möglich, die gereckte erste Laminatschicht 2 nach dem Recken an der Barriereschicht 6 zu Metallisieren und/oder zu Beschichten (beispielsweise mit Aluminiumoxid oder Siliziumoxid), bevor die erste Laminatschicht 2 mit der zweiten Laminatschicht 3 verbunden wird. Vorzugsweise wird mit Aluminium metallisiert. Die Barriereschicht 6 kann zum Zwecke des Beschichtens oder um die Haftung zur zweiten Laminatschicht 3 zu erhöhen auch einer Vorbehandlung unterzogen werden, beispielsweise einer Corona- oder Flammbehandlung. Es kann aber die Substratschicht 4 auch an der im Verpackungslaminat 1 außen liegenden Seite bedruckt oder beschichtet werden, gegebenenfalls wieder nach einer Oberflächenbehandlung. Hierbei können gängige Druckverfahren eingesetzt werden, beispielsweise ein Tiefdruckverfahren oder ein Flexodruckverfahren.

Auch die dritte Laminatschicht 8 könnte, zusätzlich oder alternativ zur ersten Laminatschicht 2, an einer oder beiden Seiten bedruckt, metallisiert oder beschichtet sein.

In einer vorteilhaften Ausgestaltung des Ausführungsbeispiels der Fig.2 ist die Barriereschicht 6 der ersten Laminatschicht 2 metallisiert, vorzugsweise mit Aluminium, um die Barrierewirkung zu erhöhen. Zusätzlich könnte die dritte Laminatschicht 8 an der Außenseite, oder im Konterdruck auch an der gegenüberliegenden Seite, bedruckt sein.

Mit Fig.3 wird ein weiteres Ausführungsbeispiel eines erfindungsgemäßen Verpackungslaminats 1 beschrieben, das vorzugsweise zur Herstellung von Tuben zum Einsatz kommen kann. Hierbei ist die erste Laminatschicht 2 an der Barriereschicht 6 wie im Beispiel der Fig.1 mit der zweiten Laminatschicht 3 verbunden. Die erste Laminatschicht 2 ist an deren Substratschicht 4 mit einer weiteren Laminatschicht 10, hier einer gereckten vierten Laminatschicht 2', verbunden, die denselben Aufbau hat wie die erste Laminatschicht 2. Die vierte Laminatschicht 2' umfasst damit wieder eine Substratschicht 4', die mit einer Verbindungsschicht 5' mit einer Barriereschicht 6' verbunden ist. Hierbei ist die Barriereschicht 6' der vierten Laminatschicht 2' mit der Substratschicht 4 der ersten Laminatschicht 2 verbunden, vorzugsweise mit einem geeigneten Kaschierkleber wie oben beschrieben. Diese Schichten der vierten Laminatschicht 2' sind wie oben bereits beschrieben aufgebaut und zusammengesetzt. Die Substratschicht 4'der vierten Laminatschicht 2' muss hierbei aber nicht notwendigerweise mit einem Kavitierungsmittel versehen sein. Die vierte Laminatschicht 2' besteht vorrangig aus PE-Materialien mit zumindest 80 Gew% PE-Anteil. Die Dicken und die exakten Zusammensetzungen bzw. Materialien der einzelnen Schichten der ersten Laminatschicht 2 und der vierten Laminatschicht 2' müssen dabei allerdings nicht überstimmen.

Auch in dieser Ausführung kann die vierte Laminatschicht 2' an der Substratschicht 4' und/oder an der Barriereschicht 6', zusätzlich oder alternativ zur ersten Laminatschicht 2, bedruckt, metallisiert oder beschichtet sein. In einer besonders vorteilhaften Ausgestaltung ist die vierte Laminatschicht 2' bedruckt, vorzugsweise an deren Barrierenschicht 6', und die erste Laminatschicht 2 metallisiert, vorzugsweise auf deren Barriereschicht 6 oder Substratschicht 4. Damit kann die Barrierewirkung des Verpackungslaminats 1 erhöht werden. Es kann aber auch eine Beschichtung aus Aluminiumoxid oder Siliziumoxid auf der Barriereschicht 6 oder Substratschicht 4 der ersten Laminatschicht 2 zur nochmaligen Erhöhung der Barrierewirkung vorgesehen sein.

Mit Fig.4 wird eine weitere vorteilhafte Ausgestaltung der Erfindung beschrieben. Hierbei ist die zweite Laminatschicht 3 wieder mehrschichtig ausgeführt und umfasst eine Substratschicht 4", Barriereschicht 6" und eine Verbindungsschicht 5", ähnlich wie in der ersten Laminatschicht 2. Für diese Schichten und auch für die Herstellung der zweiten Laminatschicht 3 in dieser Ausgestaltung gilt das oben zu den Figuren 1 bis 3 zur ersten Laminatschicht 2 oder vierten Laminatschicht 2' Ausgeführte analog. Die Substratschicht 4" muss hierbei aber nicht notwendigerweise mit einem Kavitierungsmittel versehen sein. Zusätzlich umfasst die zweite Laminatschicht 3 in dieser Ausgestaltung eine Siegelschicht 7. Die Siegelschicht 7 besteht vorzugsweise aus einem PE-Material, wie beispielsweise mLLDPE, LLDPE, oder aus einem anderen geeigneten Thermoplast, beispielsweise Polypropylen (PP). Allerdings gilt für diese zweite Laminatschicht 3 mit der Siegelschicht 7 nach wie vor, dass diese aus zumindest 80 Gew% PE besteht. Die Siegelschicht 7 der zweiten Laminatschicht 3 wird mit den anderen Schichten der zweiten Laminatschicht 3 co-extrudiert. Die zweite Laminatschicht 3 der Fig.4 ist gereckt, so wie die erste Laminatschicht 2 und so wie oben beschrieben. Die Siegelschicht 7 ist in dieser Ausführung damit in einer mehrschichtigen, gereckten Barrierefolie, die ähnlich zur ersten Laminatschicht 2 aufgebaut ist, integriert.

In dieser Ausgestaltung sind die gereckte erste Laminatschicht 2 und die gereckte zweite Laminatschicht 3 an den aneinanderstoßenden Barriereschichten 6, 6" miteinander verbunden, vorzugsweise durch Klebekaschieren mittels einer Kleberschicht 9. Ein geeigneter Kaschierkleber ist beispielsweise ein Kleber auf Basis von Polyurethan oder einem Polyolefincopolymer. Die Dicke der Kaschierschicht 9 beträgt vorzugsweise 2 bis 5 g/m².

Auch in dieser Ausführung kann eine (oder auch mehrere) der Schichten des Verpackungslaminats 1 bedruckt, metallisiert oder beschichtet sein.

Bei der Ausführung könnte natürlich auch noch an der ersten Laminatschicht 2 zusätzlich eine weitere Laminatschicht 10 (beispielsweise eine dritte Laminatschicht 8 oder vierte Laminatschicht 2' wie oben beschrieben) vorgesehen sein, wie in Fig.4 angedeutet.

Das erfindungsgemäße Verpackungslaminat 1 weist somit zumindest eine unsymmetrische, gereckte, erste Laminatschicht 2 aus zumindest 60 Gew% PE mit einer Substratschicht 4 mit Kavitierungsmittel, einer Barriereschicht 6 und einer Verbindungsschicht 5 und eine damit verbundene zweite Laminatschicht 3 mit einem PE Anteil von zumindest 80 Gew%, auf. An diesem Verpackungslaminat 1 kann, wie oben beschrieben, an der der zweiten Laminatschicht 3 abgewandten Seite der ersten Laminatschicht 2 eine weitere ein- oder mehrschichtige Laminatschicht 10 (z.B. eine dritte Laminatschicht 8 oder vierte Laminatschicht 2') mit einem PE-Anteil von zumindest 80 Gew% angeordnet sein. Diese weitere ein- oder mehrschichtige Laminatschicht 10 ist damit mit der Substratschicht 4 der ersten Laminatschicht 2 verbunden.

In einer Verpackung aus einem erfindungsgemäßen Verpackungslaminat 1 ist die Siegelschicht 7 des Verpackungslaminats 1 vorteilhafter Weise der Verpackungsinnenseite zugewandt.

Durch das Bedrucken zumindest einer Schicht der ersten Laminatschicht 2, der zweiten Laminatschicht 3 oder der weiteren Laminatschicht 10 eines erfindungsgemäßen Verpackungslaminats 1 mit einem Barrierelack, beispielsweise Polyvinylalkohol (PVOH), kann auch auf diese Weise die Barrierewirkung des Verpackungslaminats 1 weiter erhöht werden. Solche Lackschichten können sehr dünn aufgetragen werden, typischerweise im Bereich von 0,5 bis 2,0 g/m², und beeinträchtigen damit die Recyclingfreundlichkeit des Verpackungslaminats 1 nicht.

Abschließend ist anzumerken, dass auch jede einzelne der oben beschriebenen Schichten in der ersten Laminatschicht 2, zweiten Laminatschicht 3 oder der weiteren Laminatschicht 10 selbst wieder mehrschichtig aufgebaut sein kann.

Es sei auch angemerkt, dass die zweite Laminatschicht 3 des Verpackungslaminats 1 nicht unbedingt die Siegelschicht des Verpackungslaminats 1 ausbilden muss. Genauso könnte auch die Substratschicht 4 der ersten Laminatschicht 2 oder eine weiteren Laminatschicht 10 die Siegelschicht ausbilden und die zweite Laminatschicht 3 die Außenseite des Verpackungslaminats 1.

Ein möglicher vorteilhafter Aufbau eines Verpackungslaminats 1 umfasst eine erste gereckte Laminatschicht 2 und eine zweite gereckte Laminatschicht 3. Die erste Laminatschicht 2 besteht aus einer zumindest dreischichtigen Substratschicht 4, die zumindest eine zentrale kavitierte PE-Schicht (vorzugsweise HDPE oder MDPE oder eine Mischung daraus), die an jeder Seite von zumindest einer nicht kavitierten PE-Schicht (vorzugsweise HDPE oder MDPE oder eine Mischung daraus) umgeben ist. Diese Substratschicht 4 ist mit der Verbindungsschicht 5 mit der Barriereschicht 6 verbunden. Die Barriereschicht 6 kann dazu noch metallisiert (z.B. Aluminium) oder beschichtet sein (z.B. Aluminiumoxid oder Siliziumoxid). Die zweite Laminatschicht 3 ist zumindest dreischichtig aufgebaut, mit einer zentralen kavitierten PE-Schicht (vorzugsweise HDPE oder MDPE oder eine Mischung daraus), die an jeder Seite von zumindest einer nicht kavitierten PE-Schicht (vorzugsweise HDPE oder MDPE oder eine Mischung daraus) umgeben ist. Die erste Laminatschicht 2 und die zweite Laminatschicht 3 werden durch Kaschieren mit einem Kaschiermittel miteinander verbunden. Wenn die Substratschicht 4 der ersten Laminatschicht 2 als Siegelschicht verwendet wird, dann kann die Außenseite der zweiten Laminatschicht 3 bedruckt sein. Wird die Siegelschicht von der zweiten Laminatschicht 3 ausgebildet, dann kann die Substratschicht 4 bedruckt sein.

## Patentansprüche

1. Verfahren zum Herstellen eines Verpackungslaminats (1) umfassend die Schritte
- Co-Extrusion einer ersten Laminatschicht (2) bestehend aus einer Substratschicht (4) aus zumindest 60 Gew%, vorzugsweise zumindest 70 Gew% und ganz besonders vorzugsweise zumindest 80 Gew%, Polyethylen und 5 - 30 Gew%, vorzugsweise 15 - 25 Gew%, Kavitierungsmittel, einer Verbindungsschicht (5) und einer Barriereschicht (6) aus einem Barrierepolymer, vorzugsweise aus Polyamid oder Ethylen-Vinylalkohol-Copolymer, mit einer Dicke von maximal 20% der Gesamtdicke der ersten Laminatschicht (2), wobei die Verbindungsschicht (5) zwischen der Substratschicht (4) und der Barriereschicht (6) angeordnet wird und die Substratschicht (4) mehrschichtig aufgebaut ist mit einer mit einem Kavitierungsmittel kavitierten Polyethylenschicht, die entweder an einer Seite mit einer nichtkavitierten Polyethylenschicht verbunden ist, wobei die kavitierte Polyethylenschicht der zweiten Laminatschicht (3) zugewandt ist, oder an beiden Seiten mit einer nicht-kavitierten Polyethylenschicht verbunden ist,
- Recken der co-extrudierten ersten Laminatschicht (2),
- Co-Extrusion einer zweiten Laminatschicht (3) mit einem Polyethylen-Anteil von zumindest 80 Gew%, wobei die zweite Laminatschicht (3) mehrschichtig aufgebaut ist mit einer kavitierten Polyethylenschicht, die entweder an einer Seite mit einer nicht-kavitierten Polyethylenschicht verbunden ist, wobei die kavitierte Polyethylenschicht der ersten Laminatschicht (2) zugewandt ist, oder an beiden Seiten mit einer nicht-kavitierten Polyethylenschicht verbunden ist,
- Recken der co-extrudierten zweiten Laminatschicht (3)
- Verbinden der derart gereckten ersten Laminatschicht (2) mit der gereckten zweiten Laminatschicht (3), wobei die zweite Laminatschicht (3) mit der Barriereschicht (6) der ersten Laminatschicht (2) verbunden wird.

2. Verfahren nach Anspruch 1, **dadurch gekennzeichnet, dass** die erste Laminatschicht (2) vor dem Verbinden mit der zweiten Laminatschicht (3) an der Barriereschicht (6) metallisiert oder beschichtet wird.

3. Verpackungslaminat mit einer ersten Laminatschicht (2) und einer zweiten Laminatschicht (3), wobei die erste Laminatschicht (2) ein co-extrudierter und gereckter Verbund aus einer Substratschicht (4) mit einem PE-Anteil von zumindest 60Vol%, einer Verbindungsschicht (5) und einer Barriereschicht (6) aus einem Barrierepolymer, vorzugsweise aus Polyamid oder Ethylen-Vinylalkohol-Copolymer, mit einer Dicke von maximal 20% der Gesamtdicke der ersten Laminatschicht (2), ist und die zweite Laminatschicht (3) zumindest 80 Gew% PE enthält, wobei die Verbindungsschicht (5) zwischen der Substratschicht (4) und der Barriereschicht (6) angeordnet ist und die erste Laminatschicht (2) an deren Barriereschicht (6) mit der zweiten Laminatschicht (3) verbunden ist, **dadurch gekennzeichnet, dass** die Substratschicht (4) eine kavitierten Substratschicht (4) mit 5 - 30 Gew%, vorzugsweise 15 - 25 Gew%, Kavitierungsmittel ist und mehrschichtig aufgebaut ist mit einer mit einem Kavitierungsmittel kavitierten PE-Schicht, die entweder an einer Seite mit einer nicht-kavitierten PE-Schicht verbunden ist, wobei die kavitierte PE-Schicht der zweiten Laminatschicht (3) zugewandt ist, oder an beiden Seiten mit einer nicht-kavitierten PE-Schicht verbunden ist **und dass** die zweite Laminatschicht (3) mehrschichtig aufgebaut ist mit einer kavitierten PE-Schicht, die entweder an einer Seite mit einer nicht-kavitierten PE-Schicht verbunden ist, wobei die kavitierte PE-Schicht der ersten Laminatschicht (2) zugewandt ist, oder an beiden Seiten mit einer nicht-kavitierten PE-Schicht verbunden ist.

4. Verpackungslaminat nach Anspruch 3, **dadurch gekennzeichnet, dass** die Barriereschicht (6) der ersten Laminatschicht (2) metallisiert oder beschichtet ist.

5. Verpackungslaminat nach Anspruch 3, **dadurch gekennzeichnet, dass** die zweite Laminatschicht (3) oder die Substratschicht (4) der ersten Laminatschicht (2) oder eine weitere, mit der ersten Laminatschicht (2) verbundene Laminatschicht (10) eine Siegelschicht des Verpackungslaminats (1) ausbildet.

## Claims

1. Method for producing a packaging laminate (1) comprising the steps of
- co-extruding a first laminate layer (2) consisting of a substrate layer (4) made of at least 60 wt.%, preferably at least 70 wt.% and very particularly preferably at least 80 wt.% polyethylene and 5 to 30 wt.%, preferably 15 to 25 wt.%, cavitating agent, a connecting layer (5) and a barrier layer (6) consisting of a barrier polymer, preferably polyamide or ethylene vinyl alcohol copolymer, having a thickness of at most 20% of the overall thickness of the first laminate layer (2), wherein the connecting layer (5) is arranged between the substrate layer (4) and the barrier layer (6) and the substrate layer (4) has a multilayer structure with a polyethylene layer cavitated with a cavitating agent, which is either connected on one side to a non-cavitated polyethylene layer, whereas the cavitated polyethylene layer faces the second laminate layer (3), or is connected on both sides to a non-cavitated polyethylene layer,
- stretching the co-extruded first laminate layer (2),
- co-extruding a second laminate layer (3) having a polyethylene proportion of at least 80 wt.%, wherein the second laminate layer (3) has a multilayer structure with a cavitated polyethylene layer which is either connected on one side to a non-cavitated polyethylene layer, whereas the cavitated polyethylene layer faces the first laminate layer (2), or is connected on both sides to a non-cavitated polyethylene layer,
- stretching the co-extruded second laminate layer (3),
- connecting the stretched first laminate layer (2) to the stretched second laminate layer (3), wherein the second laminate layer (3) is connected to the barrier layer (6) of the first laminate layer (2).

2. Method according to claim 1, **characterized in that** the first laminate layer (2) is metallized or coated on the barrier layer (6) before being connected to the second laminate layer (3).

3. Packaging laminate comprising a first laminate layer (2) and a second laminate layer (3), wherein the first laminate layer (2) is a co-extruded and stretched composite consisting of a substrate layer (4) having an PE proportion of at least 60 vol.%, a connecting layer (5) and a barrier layer (6) consisting of a barrier polymer, preferably polyamide or ethylene vinyl alcohol copolymer, having a thickness of at most 20% of the overall thickness of the first laminate layer (2), and the second laminate layer (3) contains at least 80 wt.% of PE, wherein the connecting layer (5) is arranged between the substrate layer (4) and the barrier layer (6), and the first laminate layer (2) is connected, at its barrier layer (6), to the second laminate layer (3), **characterized in that** the substrate layer (4) is a cavitated substrate layer (4) with 5 to 30 wt.%, preferably 15 to 25 wt.%, of cavitating agent and has a multilayer structure having a PE layer cavitated with a cavitating agent, which is either connected on one side to a non-cavitated polyethylene layer, whereas the cavitated PE layer faces the second laminate layer (3), or is connected on both sides to a non-cavitated PE layer **and in that** the second laminate layer (3) has a multilayer structure having a cavitated PE layer which is either connected on one side to a non-cavitated polyethylene layer, whereas the cavitated PE layer faces the first laminate layer (2), or is connected on both sides to a non-cavitated PE layer.

4. Packaging laminate according to claim 3, **characterized in that** the barrier layer (6) of the first laminate layer (2) is metallized or coated.

5. Packaging laminate according to claim 3, **characterized in that** the second laminate layer (3) or the substrate layer (4) of the first laminate layer (2), or a further laminate layer (10) connected to the first laminate layer (2) forms a sealing layer of the packaging laminate (1).

## Revendications

1. Procédé de production d'un laminé d'emballage (1) comprenant les étapes
- de co-extrusion d'une première couche de laminé (2) constituée d'une couche de substrat (4) à base d'au moins 60 % en poids, de préférence d'au moins 70 % en poids et de manière tout particulièrement préférée d'au moins 80 % en poids de polyéthylène et de 5 à 30 % en poids, de préférence de 15 à 25 % en poids, d'agent de cavitation, d'une couche de liaison (5) et d'une couche barrière (6) à base de polymère barrière, de préférence de polyamide ou de copolymère éthylène-alcool vinylique, d'une épaisseur d'au plus 20 % de l'épaisseur totale de la première couche de laminé (2), la couche de liaison (5) étant disposée entre la couche de substrat (4) et la couche barrière (6) et la couche de substrat (4) étant formée en plusieurs couches avec une couche de polyéthylène ayant subi une cavitation avec un agent de cavitation et reliée soit d'un côté à une couche de polyéthylène n'ayant pas subi de cavitation, la couche de polyéthylène ayant subi une cavitation faisant face à la seconde couche de laminé (3), soit des deux côtés avec une couche de polyéthylène n'ayant pas subi de cavitation,
- d'étirement de la première couche de laminé (2) co-extrudée,
- de co-extrusion d'une seconde couche de laminé (3) comportant une teneur en polyéthylène d'au moins 80 % en poids, la seconde couche de laminé (3) étant formée avec une structure multicouche comportant une couche de polyéthylène ayant subi une cavitation qui est reliée soit d'un côté à une couche de polyéthylène n'ayant pas subi de cavitation, la couche de polyéthylène ayant subi une cavitation faisant face à la première couche de laminé (2), soit des deux côtés à une couche de polyéthylène n'ayant pas subi de cavitation,
- d'étirement de la seconde couche de laminé (3) co-extrudée
- de liaison de la première couche de laminé (2) ainsi étirée à la seconde couche de laminé (3) étirée, la seconde couche de laminé (3) étant reliée à la couche barrière (6) de la première couche de laminé (2).

2. Procédé selon la revendication 1, **caractérisé en ce que** la première couche de laminé (2) est métallisée ou revêtue sur la couche barrière (6) avant qu'elle ne soit reliée à la seconde couche de laminé (3).

3. Laminé d'emballage comportant une première couche de laminé (2) et une seconde couche de laminé (3), la première couche de laminé (2) étant un composite co-extrudé et étiré constitué d'une couche de substrat (4) comportant une teneur en PE d'au moins 60 % en volume, d'une couche de liaison (5) et d'une couche barrière (6) constituée d'un polymère barrière, de préférence de polyamide ou de copolymère éthylène-alcool vinylique, d'une épaisseur d'au plus 20 % de l'épaisseur totale de la première couche de laminé (2), et la seconde couche de laminé (3) contenant au moins 80 % en poids de PE, la couche de liaison (5) étant disposée entre la couche de substrat (4) et la couche barrière (6) et la première couche de laminé (2) étant reliée à la seconde couche de laminé (3) au niveau de sa couche barrière (6), **caractérisé en ce que** la couche de substrat (4) est une couche de substrat (4) ayant subi une cavitation comportant 5 à 30 % en poids, de préférence 15 à 25 % en poids, d'agent de cavitation et est formée en plusieurs couches avec une couche de PE ayant subi une cavitation par un agent de cavitation, laquelle est reliée soit d'un côté à une couche de PE n'ayant pas subi de cavitation, la couche de PE ayant subi une cavitation faisant face à la seconde couche de laminé (3), soit des deux côtés avec une couche de PE n'ayant pas subi de cavitation, **et en ce que** la seconde couche de laminé (3) est formée en plusieurs couches avec une couche de PE ayant subi une cavitation qui est reliée soit d'un côté à une couche de PE n'ayant pas subi de cavitation, la couche de PE ayant subi une cavitation faisant face à la première couche de laminé (2), soit des deux côtés à une couche de PE n'ayant pas subi de cavitation.

4. Laminé d'emballage selon la revendication 3, **caractérisé en ce que** la couche barrière (6) de la première couche de laminé (2) est métallisée ou revêtue.

5. Laminé d'emballage selon la revendication 3, **caractérisé en ce que** la seconde couche de laminé (3) ou la couche de substrat (4) de la première couche de laminé (2) ou une autre couche de laminé (10) reliée à la première couche de laminé (2) forme une couche de scellage du laminé d'emballage (1).
